# EUROPÄISCHE PATENTSCHRIFT

(11) **EP 1 065 518 B1**
(45) Veröffentlichungstag und Bekanntmachung des Hinweises auf die Patenterteilung: **05.03.2003**
(21) Anmeldenummer: 00113421.2
(22) Anmeldetag: 24.06.2000
(51) Int. Cl.: G01S 13/87, G01S 13/90

(54) **Hochauflösendes Synthetik-Apertur-Radarsystem**
High resolution SAR
Radar à aperture synthétique avec grande résolution

(30) Priorität: 26.06.1999 DE 19929143
(43) Veröffentlichungstag der Anmeldung: 03.01.2001
(73) Patentinhaber: Deutsches Zentrum für Luft- und Raumfahrt e.V., 53175 Bonn (DE)
(72) Erfinder: Runge, Hartmut, 81377 München (DE)
(74) Vertreter: von Kirschbaum, Albrecht, Dipl.-Ing.

(56) Entgegenhaltungen:
- US-A- 4 602 257
- CURRY R G: "A LOW-COST SPACE-BASED RADAR SYSTEM CONCEPT" PROCEEDINGS OF THE 1996 NATIONAL RADAR CONFERENCE,US,NEW YORK, IEEE, 13. Mai 1996 (1996-05-13), Seiten 1-6, XP000634909 ISBN: 0-7803-3147-8

## Beschreibung

Die Erfindung betrifft ein hochauflösendes Synthetik-Apertur-Radarsystem.

Aus US-A-4 602 257 ist ein System mit beispielsweise drei Paaren von bistatischen SAR-Satellitensystemen bekannt, die sich in einer Formation in Form eines gleichseitigen Dreiecks bewegen und damit in vorgegebenem Abstand voneinander angeordnet sind. Hierbei sind deren Antennenblickrichtungen auf den gleichen beleuchteten Bereich auf dem Boden gerichtet. Die erhaltenen mehrfachen SAR-Datensätze werden in einem Signalprozessor phasenrichtig überlagert und zu einem SAR-Bild zusammengesetzt.

Bei der Fernerkundung mit Synthetischen Apertur Radar (SAR) ist die geometrische Auflösung der erzielten Bilder seit Beginn der Entwicklung mit SEASAT über ERS (Earth Remote Sensing Satellite) bis Radarsat-I praktisch gleich geblieben. So liegt die typische geometrische Auflösung der mit diesen Sensoren erhaltenen Bilder im Bereich von etwa 10m.

Eine Steigerung der geometrischen Auflösung in Entfernungs-Richtung ist durch die Aussendung einer höheren Puls-Bandbreite und der entsprechenden Erhöhung der Abtastrate des Empfangssignals relativ leicht möglich. Da der Frequenzhub des meistens verwendeten Chirp-Signals nicht beliebig gesteigert werden kann, führt dies allerdings zu zeitlich länger ausgedehnten Sende- und Empfangssignalen, die das verfügbare Zeitfenster für den Empfang der Radarechos verkleinern.

Eine Erhöhung der Auflösung in Azimut-Richtung gestaltet sich dagegen schwieriger. Sie ist prinzipiell möglich durch Verkürzen der Antenne und Aufweiten des Antennenleuchtflecks am Boden, was zu einer höheren synthetischen Apertur-Zeit bzw. Azimut-Bandbreite führt. Ferner wird eine entsprechend erhöhte PRF (Pulse Repetition Frequency) benötigt, um das Azimut-Signal ausreichend abzutasten. Die PRF läßt sich aber nicht beliebig erhöhen, da es sonst an der gemeinsamen Sende- und Empfangsantenne zu zeitlichen Überlagerungen von Sendeund Empfangsimpulsen käme. Dies gilt um so mehr, wenn, wie oben beschrieben, die Zeitdauer des gesendeten Signals ebenfalls erhöht wird. Als Lösung bleibt dann nur noch die Echozeit und damit die Breite des aufgenommenen Geländestreifens einzuschränken.

Wird mit einem herkömmlichen SAR-Verfahren versucht, die erreichbare Auflösung in Flugrichtung zu erhöhen, muß immer die Antenne verkleinert werden. Um ein gleich bleibendes Signal / Rauschverhältnis zu erhalten, muß die Sendeenergie erhöht werden. Auch die notwendige höhere PRF benötigt mehr Energie, so daß diese Konzepte zwangsläufig zu großen und teuren Satelliten führen. Diese Zusammenhänge sind beispielsweise in dem Buch von J. C. Curlander und R. N. McDonough, "Synthetic Aperture Radar: Systems and Signal Processing", 1991 erschienen bei Wiley, beschrieben.

Eine weitere bekannte Möglichkeit um eine höhere geometrische Auflösung zu erzielen, ist das sog. Spotlight SAR (siehe beispielsweise das Buch von Walter G. Carrara et. al, "Spotlight Synthetic Apertur Radar", Artech House, 1995, Stn.81 bis 154). Bei dem Spotlight SAR wird ein Bereich am Boden mit Hilfe einer steuerbaren Antenne länger beleuchtet und dadurch wird die Beobachtungzeit bzw. die gewonnene Azimut-Bandbreite vergrößert. Nachteilig bei diesem Verfahrens ist, daß kein kontinuierlicher Streifen am Boden aufgenommen werden kann und eine aufwendige Strahl-Steuerung notwendig ist.

Ein weiterer Nachteil aller bisher bekannten satellitengestützen SAR Systeme, wie ERS, Radarsat und ASAR / Envisat ist deren hoher Preis, was darauf zurückzuführen ist, daß es sich in der Regel um Unikate handelt. Da meistens nur ein oder zwei Systeme benötigt werden, ist zum einen keine Serienfertigung möglich und zum anderen kommen, da die Satelliten im allgemeinen sehr schwer sind, auch nicht viele verfügbare Trägerraketen in Betracht, weshalb wiederum die Startkosten sehr hoch sind. Darüber hinaus sind die Systemkosten weiterhin durch hohe Aufwendungen für vorausgehende Simulationen, intensive Tests und die redundante Auslegung wichtiger Teile des Satelliten belastet, wobei auf diese aufwendigen Maßnahmen nicht verzichtet werden kann.

Aufgabe der Erfindung ist es daher unter Vermeidung der Nachteile der bisher eingesetzten Radarsysteme ein hochauflösendes Radarsystem zur Fernerkundung der Erde zu schaffen. Gemäß der Erfindung ist diese Aufgabe bei einem hochauflösenden Radarsystem zur Fernerkundung der Erde mit den Merkmalen des Anspruchs 1 erreicht. Vorteilhafte Weiterbildungen sind Gegenstand der auf den Anspruch 1 unmittelbar oder mittelbar rückbezogenen Ansprüche.

Mit dem hochauflösenden Radarsystem gemäß der Erfindung kann ein kontinuierlicher und breiter Streifen auf der Erde mit hoher Auflösung aufgenommen werden. Gemäß der Erfindung kommen eine Anzahl Kleinsatelliten mit niedrigem Energieverbrauch zum Einsatz; ein aufwendig zu entwickelnder und damit meist auch schwerer Einzelsatellit mit neuer Technologie wird somit nicht mehr benötigt. Die gemäß der Erfindung eingesetzten Kleinsatelliten sind alle baugleich und können dadurch preiswert in Serie hergestellt werden. Obendrein basiert jeder Satellit auf weitgehend herkömmlicher Radartechnologie. Bei der erfindungsgemäßen Lösung arbeiten die jeweils eine Einheit bildenden Kleinsatelliten in einem Verbund zusammen, so daß auf diese Weise eine höhere geometrische Auflösung erreicht wird.

Darüber hinaus besitzt das erfindungsgemäße Radarsystem eine hohe Ausfallsicherheit. Fällt nämlich einer der Kleinsatelliten aus, so mindert dies anteilsmäßig nur die erreichbare Bildqualität, führt jedoch nicht zu einem Systemausfall. Weiterhin kann ein defekter Kleinsatellit in dem System jederzeit wieder ersetzt werden. Da es sich um verhältnismäßig leichte Satelliten handelt, ist auch ein Start mit einfachen Trägerraketen, so beispielsweise mit noch verfügbaren, aber nicht mehr benötigten Interkontinentalraketen möglich. Da die benötigten Komponenten im wesentlichen vorhanden sind und daher nicht mehr neu entwickelt werden müssen, ist das erfindungsgemäße Radarsystem ausgesprochen preiswert zu erstellen.

Für den Einsatz auf Kleinsatelliten ist besonders wichtig und vorteilhaft, daß das erfindungsgemäße Radarsystem einen wesentlich geringeren Energieverbrauch hat als ein Standard-SAR System, bei dem die Antenne verkleinert und die PRF heraufgesetzt ist. Im Vergleich zu dem Standard-SAR mit kurzer Antenne ist die gesamte Antennenlänge und damit der Antennengewinn bei dem neuen multi-statischen Verfahren um n², wobei mit n die Anzahl an Empfangseinheiten bezeichnet ist, größer, da die Empfangsantennen nicht verkleinert werden müssen und n Empfänger verwendet werden.

Weiterhin ist von Vorteil, daß im Vergleich zum Standard-SAR und dem sogenannten Spotlight SAR die Azimut-Integrationszeit, d.h. die Beleuchtungszeit eines Punktzieles, um den Faktor n kleiner wird, was die Abbildung von sich zeitlich verändernden Objekten verbessert.

Nachfolgend werden anhand der anliegenden Zeichnungen bevorzugte Ausführungsformen des erfindungsgemäßen Radarsystems im einzelnen erläutert. Es zeigen:
- Fig.1: schematisch Aufbau und Arbeitsweise einer Ausführungsform eines hochauflösenden Radarsystems;
- Fig.2: eine prinzipielle Darstellung eines verbreiterten Doppler-Spektrums;
- Fig.3a bis 3d: verschiedene Anordnungsformen von satelliten- oder flugkörpergetragenen SAR-Plattformen, und
- Fig.4: ein Range/Azimut-Empfangsspektrum eines multi-statischen SAR-Systems mit mehreren Sendern.

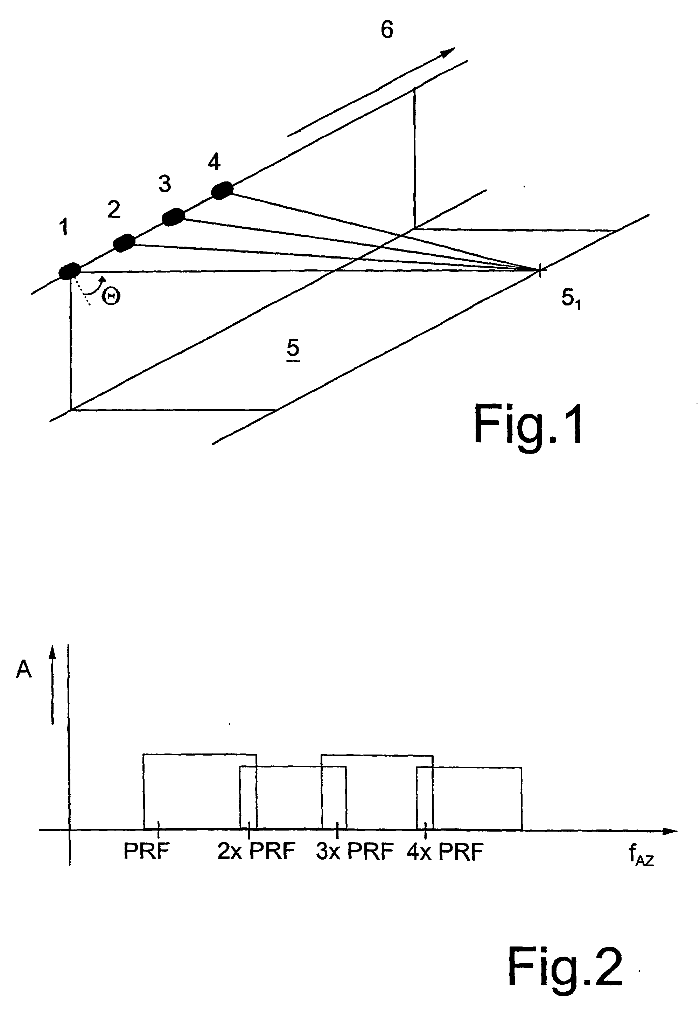

In Fig.1 ist schematisch eine Anzahl von in gleichem Abstand voneinander und in einer Reihe "hintereinander fliegender" Satelliten 1 bis 4 dargestellt, auf welchen jeweils im einzelnen nicht dargestellte SAR-Plattformen mit Empfänger- und gegebenenfalls auch Sendereinheiten vorgesehen sind. Hierbei sind die in Fig.1 ebenfalls nicht näher bezeichneten SAR-Antennen der auf den Satelliten 1 bis 4 untergebrachten SAR-Plattformen auf den gleichen Bereich am Boden 5, beispielsweise auf ein Punktziel 5₁ gerichtet.

Die Blickrichtung der auf den auf den Satelliten 1 bis 4 vorgesehenen SAR-Antennen ist durch Verbindungslinien zwischen den einzelnen Satelliten 1 bis 4 und dem Punktziel 5₁ angedeutet, während die Flugrichtung der Satelliten 1 bis 4 durch den Pfeil 6 angezeigt ist. Durch die Anzahl der hintereinander fliegenden Satelliten 1 bis 4 bzw. durch die auf diesen Satelliten installierten SAR-Plattformen ist die aufgenommene Azimut-Bandbreite erheblich vergrößert.

Die unterschiedliche Schrägsicht der Satelliten 1 bis 4 führt zum Empfang unterschiedlicher Teilbereiche des Azimut-(Doppler) Spektrums. Die auf den SAR-Plattformen der einzelnen Satelliten 1 bis 4 empfangenen Signale werden in einem SAR-Prozessor, der sich in der Regel in einer Bodenstation befindet, in der Weise zusammengesetzt, daß sich ein verbreitertes Doppler-Spektrum ergibt, was in Fig.2 schematisch angedeutet ist. Hierbei sind in Fig.2 auf der Abszisse die Frequenz in Azimutrichtung und auf der Ordinate die Amplitude aufgetragen. Durch Zusammenfügen der Daten von jedem Satelliten kann ein SAR-Bild mit einer entsprechend vergrößerten Auflösung berechnet werden.

Mit Hilfe der Formel f_{D} = -2ν/λ sinΘ, wobei mit f_{D} die Dopplerfrequenz, mit ν die Geschwindigkeit der Plattform, mit λ die Wellenlänge der Trägerwelle und mit Θ (siehe Fig.1) der effektive Blickwinkel bezeichnet ist, werden für die Antennen der einzelnen Plattformen die Blickwinkel so eingestellt, daß die Empfänger benachbarte Spektralbereiche aufzeichnen.

Die Abstände der einzelnen Satelliten 1 bis 4 voneinander müssen so bemessen sein, daß sie etwa der synthetischen Aperturlänge der auf den einzelnen Satelliten untergebrachten SAR-Antenne entsprechen. Bei einem sogenannten C-Band Satelliten liegt dieser Abstand im Bereich von einigen Kilometern. Wenn diese Bedingung eingehalten ist, lassen sich in dem nachgeschalteten Signalprozessor die Azimut-(Doppler)Spektren der SAR-Radarsysteme der einzelnen Satelliten 1 bis 4 lückenlos aneinanderfügen.

Dies ist wichtig, damit in dem sich ergebenden SAR-Bild eine einwandfreie Impulsantwort entsteht, wie von einem System, aber mit einer um den Faktor n vergrößerten Apertur, wobei mit n die Anzahl Satelliten bezeichnet ist. Bei dem hochauflösenden Radarsystem gemäß der Erfindung erhöht sich somit die erreichbare Azimut-Auflösung etwa um den Faktor n, d.h. entsprechend der Anzahl in dem System vorgesehenen Satelliten.

Jeder der Satelliten verfügt über eine eigene Telemetriestrecke zu einer Bodenstation, zu welcher die Daten übertragen werden und in welcher sich ein zentraler SAR-Prozessor befindet. In dem SAR-Prozessor werden die Daten der einzelnen Satelliten zu dem hochaufgelösten Bild zusammengefügt. Prinzipiell ist es auch möglich, die Daten der einzelnen Kanäle an Bord des Satelliten zu Bildern mit einfacher Auflösung zu verarbeiten. Um die vergrößerte Auflösung zu erreichen, sind jedoch die Daten von allen Satelliten notwendig, so daß sie zentral gesammelt werden müssen. Dies wird in der Regel nicht in einem Satelliten, sondern in einer Bodenstation erfolgen.

In einem zentralen Signalprozessor müssen die Teilspektren aus den einzelnen SAR-Kanälen phasenrichtig zusammengesetzt werden. Für die Bestimmung der Phasenverschiebung zwischen den Kanälen ist es eine notwendige Voraussetzung, daß der Satelliten-Abstand etwas kleiner gewählt ist, damit sich die Dopplerspektren der einzelnen Kanäle, wie in Fig.2 angedeutet, etwas überlappen. Durch eine Interferogrammbildung des Überlappungsbereichs der Dopplerspektren von benachbarten Satelliten kann mit Hilfe des zentralen Signalprozessors die Phasenverschiebung zwischen den Kanälen bestimmt und dann korrigiert werden. Dies ist ein in der SAR-Interferometrie gebräuchliches Verfahren.

Das Zusammensetzen der Teilspektren kann sowohl im Zeit- als auch im Frequenzbereich erfolgen. Wird das Zusammensetzen im Zeitbereich ausgeführt, werden die Signale zunächst um den Faktor n in Azimut-Richtung interpoliert und dann an der Position im Azimut-Spektrum gemischt, die der tatsächlichen Dopplerfrequenz entspricht, so als wenn das Signal nicht mit der einfachen PRF unterabgetastet wäre. Die Realisierung im Frequenzbereich ist rechenzeit-effektiver, da die Interpolation durch Auffüllen des Spektrums mit Nullen erreicht wird.

Es ist sowohl möglich, zunächst sowohl die Datensätze der einzelnen SAR-Systeme zu fokussieren und dann die Bildspektren aneinanderzusetzen als auch die SAR-Rohdaten im Azimut-(Doppler-)Spektrum zusammenzusetzen und die SAR-Fokussierung mit einer Referenzfunktion durchzuführen, die sich über alle Datensätze erstreckt.

Das eingangs erwähnte Zeit-Bandbreitenproblem (Entfernungs-Zeitfenster und Dopplerbandbreite) bei herkömmlichen SAR-Systemen wird bei dem hochauflösenden Radarsystem gemäß der Erfindung durch eine Parallelisierung, d.h. durch eine Anzahl von n "parallel geschalteten" Satelliten gelöst. Hierbei empfängt jeder der Anzahl von n Satelliten von dem beleuchteten Bereich, beispielsweise dem Punktziel 5₁ in Fig.1 am Boden 5 einen anderen Ausschnitt des Doppler-Spektrums. Hierbei muß dann die PRF nur so hoch gewählt werden, wie bei einem SAR-Radar mit einer einfachen Apertur.

Es wird das Prinzip des sogenannten bistatischen SAR-Radars verwendet, da Sender und Empfänger getrennt sind. Da das empfangene Signal kohärent zum Sendesignal detektiert werden muß, werden in den Sendern und Empfängern exakt die gleichen STALO(Stable Local Oscillator)-Frequenzen verwendet. Gegebenenfalls kann auch die STALO-Frequenz von einem in einem der Anzahl Satelliten untergebrachten Hauptoszillator zu den anderen Satelliten übertragen werden.

Der Abstand zwischen den Satelliten sollte möglichst wenig driften und muß daher ständig (beispielsweise mit einem Laser-Entfernungsmesser) gemessen und nachgeregelt werden. Eine Abstandsdrift kann auch dadurch vermieden werden, daß die Geschwindigkeit der Satelliten (beispielsweise mit einem GPS Empfänger) ständig gemessen und auf den gleichen Wert geregelt wird.

Wenn sich die Satelliten mit exakt gleicher Geschwindigkeit bewegen, nehmen sie auch automatisch die exakt gleiche Flughöhe ein. Die Abstandsdrift der Satelliten untereinander darf während der synthetischen Aperturzeit nur einen Bruchteil der Wellenlänge betragen. Kann dies nicht eingehalten werden, muß die Phase des kohärenten Detektors nachgeregelt werden. Es muß also eine Art Motion-Kompensation durchgeführt werden. Die Abstandsänderungen im mm-Bereich können sowohl mit einem Laser-Entfernungsmesser als auch mit einer Mikrowellenverbindung gemessen werden, die auch zur Übertragung der STALO-Frequenz verwendet wird.

Für die Beleuchtung des Bodens gibt es mehrere Möglichkeiten:
1. Ein aktiver SAR-Satellit (der auch über einen Empfänger verfügen könnte) fliegt in der Formation der ausschließlich als Empfänger arbeitenden Kleinsatelliten mit. Bei dem Sender könnte es sich auch um einen bereits existieren Satelliten, wie ERS-1/2, handeln.
2. Alle SAR-Satelliten in der Formation sind aktiv und beleuchten gleichzeitig das gleiche Gebiet, beispielsweise das Punktziel 5₁, am Boden 5. Da die Signale von allen Empfängern empfangen werden, addiert sich die Signalleistung auf und die Sendeleistung kann entsprechend verringert werden. Um die Signale im Signalprozessor wieder trennen zu können, muß jeder Sender in einem anderen Spektralbereich arbeiten, bzw. unterschiedlich kodierte Impulsformen, wie "up oder down Chirps" oder M-Sequenzen mit guten Korrelationseigenschaften, verwenden.
   Dies wird im folgenden näher ausgeführt:
   Ein vom Boden rückgestreutes Signal enthält Anteile von allen Sendesatelliten und wird von allen Empfängern, jedoch unter verschiedenen Blickwinkeln aufgenommen. Dadurch empfängt jeder Satellit jeweils nicht mehr nur einen Teil des Azimutspektrums, wie in Fig.2 angedeutet, sondern das gesamte Azimutspektrum.
   Da nur mit der einfachen PRF gearbeitet wird, wäre dieses breitbandige Azimut-Signal eines Empfängers jedoch unterabgetastet. Daher müssen die Signale von allen Empfängern kombiniert werden. Um eine entsprechende Verarbeitung bewerkstelligen zu können, müssen im Empfangssignal die Anteile der einzelnen Sende- und Empfangssatelliten aufgetrennt werden.
   Dafür werden im folgenden zwei Verfahren gemäß der Erfindung angegeben:
   a) Bei einer spektralen Codierung von Sendesignalen arbeiten die SAR-Sender auf der gleichen Trägerfrequenz, jedoch mit unterschiedlichen Modulationsfrequenzbändern. Die meist beim Synthetik Apertur Radar (SAR) verwendeten Chirp-Signale können dann beispielsweise, wie folgt aufgeteilt werden: Der erste Sender hat einen Range-Chirp von 0 bis 20MHz, der zweite Sender hat einen Range-Chirp von 20MHz bis 40MHz, der dritte Sender hat einen Range-Chirp von 40MHz bis 60Mhz, usw..
      Dadurch steigt die abzutastende Bandbreite in den Empfangskanälen natürlich entsprechend an, so daß eine um n höhere Empfänger-Abtastrate gewählt werden muß, wobei mit n = Anzahl der Sendesatelliten bezeichnet ist. In einem Empfänger werden auf diese Weise von jedem Sender unterschiedliche Rangespektren und durch die unterschiedlichen Blickwinkel verschiedene Azimutspektren aufgenommen.

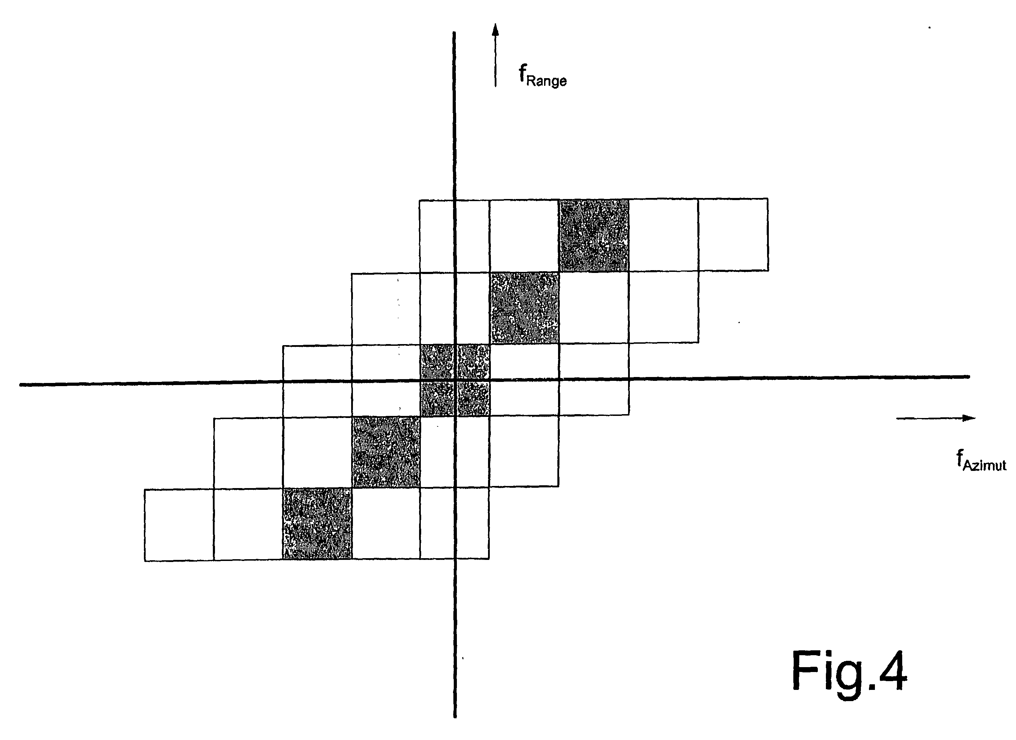

      In Fig.4 ist ein rautenförmiges Gesamtspektrum aller empfangenen Signale dargestellt, wobei auf der Abszisse die Frequenz f_{Azimut} und auf der Ordinate die Frequenz f_{Range} aufgetragen sind. Die empfangenen Spektralanteile des an zentraler Position innerhalb einer linearen Formation fliegenden Empfängers sind in Fig.4 grau unterlegt hervorgehoben. In den in der Formation benachbarten Empfängern werden jeweils die im Range/Azimut-Spektrum benachbarten Spektralanteile aufgenommen.
      Die Synthese des Gesamtspektrums erfolgt in einem zentralen Signalverarbeitungssystem (zentralen SAR-Prozessor), in dem die Spektralanteile von allen Empfängern zusammengefügt werden, so daß sich das in Fig.4 dargestellte rautenförmige, aber kompakte Spektrum ergibt.
      Da die Abtastung in Azimut in jedem Satelliten nur mit der einfachen PRF erfolgt, ist es notwendig, die in jedem Satelliten aufgenommenen und von verschiedenen Quellen herrührenden Spektralanteile aufzutrennen, bevor sie richtig zusammengesetzt werden können.
      Dafür kann in der Zwischenfrequenzstufe des Radarsystems eine herkömmliche Filterbank in Analogtechnik vorgesehen sein. Wegen der erforderlichen Phasengenauigkeit ist jedoch eine digitale Signalverarbeitung vorteilhafter. Die notwendige spektrale Filterung läßt sich rechenzeiteffektiv in der Rangekompression unterbringen, da diese in der Regel im Frequenzbereich durchgeführt wird.
      Nach der Filterung werden die Spektralanteile entsprechend dem in Fig.4 angegebenen Range/Azimutspektrum phasenrichtig zusammengefügt. Wie bereits beschrieben, wird die Korrekturphase aus einem Interferogramm aus den Daten des Überlappungsbereichs des Azimutspektrums zwischen zwei benachbarten Empfängern bestimmt. Die Daten jeden Kanals werden mit der jeweils ermittelten Korrekturphase beaufschlagt.
      Die Azimut-Kompression kann in einem Schritt mit dem synthetisierten breitbandigen Azimut-Spektrum erfolgen oder auch für jeden Kanal separat mit anschließender phasenkorrigierter Addition der komplexen (und interpolierten) Bilddaten durchgeführt werden. Das um den Faktor n vergrößerte Range-Spektrum und die damit verbundene verbesserte Range-Auflösung ist ein willkommener Nebeneffekt, da die Generierung eines sehr breitbandigen Range-Chirps technisch Schwierigkeiten macht und das Aussenden eines langen Signals wertvolle Zeit kostet.
   b) Bei einer Codierung der Sendesignale mit Korrelationsfunktionen wird die bekannte Korrelationstechnik benutzt, wie sie auch bei der SAR-Rangekompression verwendet wird, mit deren Hilfe sich überlagernde Signale separiert werden können. Als einfachstes Beispiel für einen gut geeigneten Korrelationscode werden in einem Sender ein in der Modulationsfrequenz aufsteigendes Range-Chirp und in einem anderen Sender ein in der Modulationsfrequenz absteigendes Range-Chirp verwendet.
      Die sich in einem Empfänger überlagernden Daten von zwei Sendern werden aufgetrennt, indem die Daten einmal mit dem aufsteigenden und einmal mit dem absteigenden Range-Chirp korreliert werden. Wenn mehr Kanäle verwendet werden sollen, sind andere aus der Korrelationstechnik bekannte Codes, wie beispielsweise die sogenannten M-Sequenzen, zu verwenden.
      Da bei dem Korrelationsverfahren der sog. Radar-Clutter stark zunimmt, ist es insbesondere geeignet, um starke Streuer, wie Punktziele, mit verbesserter Auflösung abzubilden. Die Korrelation der empfangenen Daten mit den ausgesandten Codes kann rechenzeiteffizient mit der Rangekompression kombiniert werden. Anschließend würden die Azimutspektren wie oben beschriebenen zusammengefügt und zu einem hochaufgelösten Bild verarbeitet.
3. Es werden ein oder mehrere "Beleuchtungssatelliten" verwendet, die auch geostationär betrieben werden können. Für das abgestrahlte Signal kann die gleiche Pulstechnik wie für herkömmliche SAR-Systeme verwendet werden. Die Kleinsatelliten könnten auf niedrigen Umlaufbahnen operieren und wären, da sie passiv bleiben, auch schwer zu orten.

Dies wäre beispielsweise besonders vorteilhaft für eine militärische Aufklärung, da es schwierig ist herauszufinden, wann dieses völlig passive System ein bestimmtes Gebiet überfliegt. Eine Krisenregion könnte quasi ständig beleuchtet werden und bei jedem Überflug der Anzahl Kleinsatelliten aufgenommen werden. Auch wäre eine gewisse Strahlnachführung durch den Beleuchtungssatelliten möglich. Da die Kleinsatelliten preiswert herzustellen sind, könnte es auch mehrere Gruppen von Satelliten geben, um die sog. "Re-Visit Time" zu verkürzen.

Fällt ein Empfangssatellit aus, so verschlechtert sich, ähnlich wie bei einem beschädigten Hologramm, nur die Gesamt-Auflösung. Die prinzipielle Funktionalität bleibt aber erhalten. Durch Starten eines neuen Satelliten könnte die ursprüngliche Leistung wieder hergestellt werden. Das bedeutet, daß redundante Hardware nicht ständig mitgeschleppt werden muß, um eventuell einmal aktiviert zu werden, sondern sie kann später einfach hinzugefügt werden. Auf diese Weise könnte das System praktisch unbegrenzt in Betrieb gehalten werden.

Reine Empfangssatelliten würden mit einem sehr geringen Masse auskommen, da sie nicht über eine anspruchsvolle Energieversorgung für den Sender verfügen müßten. Es würde sich mehr oder weniger um Kleinsatelliten in Form von Panels handeln, die auf der der Sonne zugewandten Seite mit Solarzellen und auf der der Erde zugewandten Seite mit der SAR-Antenne versehen sind. Deren Gesamtgewicht könnte dann unter lOOkg liegen und die Herstellungskosten wären wesentlich niedriger als bei aktiven SAR-Sensoren. Die Empfangssatelliten verfügen weiterhin über einen Datenspeicher und einen sogenannten "Down-Link" zur Übertragung der Daten zur Bodenstation.

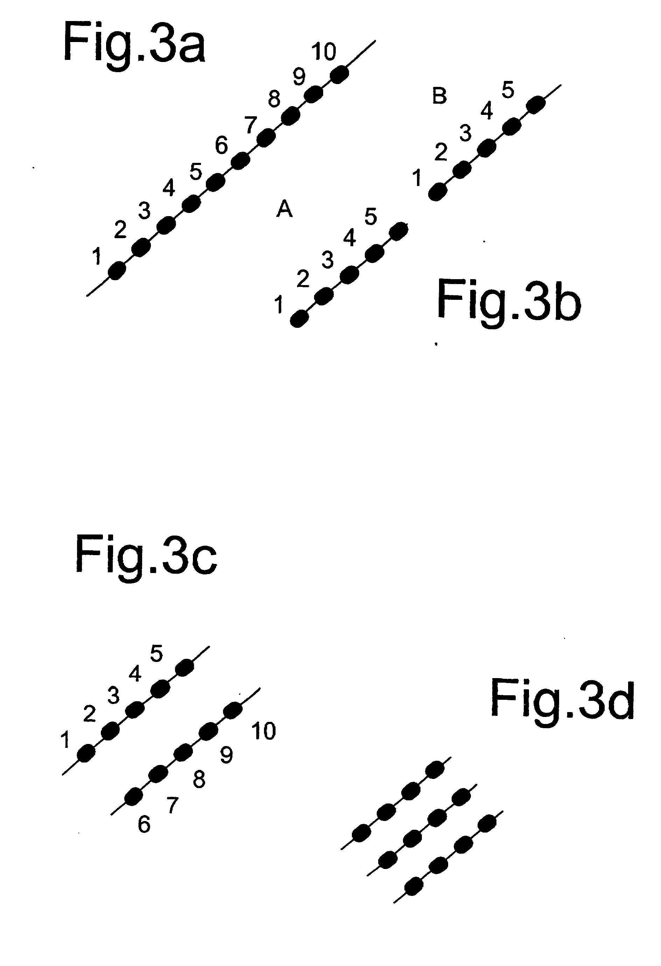

Neben der ausschließlichen Erhöhung der Azimut-Auflösung durch die Anordnung einer Anzahl Satelliten in einer Reihe könnte eine Gruppe von beispielsweise zehn (10) Einheiten, Satelliten 1 bis 10 (siehe Fig.3a) auch für andere Anwendungen konfiguriert werden. So würden für hochauflösende Along-Track Interferometrie beispielsweise zwei Gruppen A und B von jeweils fünf Satelliten 1 bis 5 und 6 bis 10 in einer Reihe zusammengefaßt (Fig.3b).

Für die Across-Track Interferometrie, wie sie zur Gewinnung von digitalen Geländemodellen eingesetzt wird, würden beispielsweise zwei (2) etwa parallel zueinander angeordnete Reihen C und D von jeweils fünf (5) Einheiten, Satelliten 1 bis 5 und 6 bis 10 angeordnet (Fig.3c). Die Fähigkeit zur genauen Entfernungsmessung zwischen den Einheiten ist dabei sehr vorteilhaft und kann zur Bestimmung der interferometrischen Basislinie zwischen den zwei Reihen von Satelliten benutzt werden. Zur Detektion und Vermessung von Bewegtzielen am Boden könnte ein Array von beispielsweise (3 x 4) Empfängern konfiguriert werden (Fig.3d).

Werden aktive Einheiten verwendet, kann die Flexibilität auch genutzt werden, um auf Anforderung einen sehr breiten Streifen mit niedriger Auflösung aufzunehmen. Dazu werden die seitlichen Blickwinkel der Satelliten so eingestellt, daß sie alle einen anderen Teilstreifen (sub-sweath) parallel zur Flugbahn aufnehmen.

Es könnte auch eine ganze Reihe von Empfängern nebeneinander angeordnet werden, um die Entfernungs-Auflösung zu verbessern. Dies ist jedoch nicht Ziel der Anmeldung und wäre auch nur kurzfristig möglich, da der Abstand von nebeneinander auf gleicher Flughöhe "fliegender" Satelliten bei einer Erdumrundung nicht konstant gehalten werden kann.

Das hochauflösende Radar-System kann statt mit Satelliten auch mit Flugkörpern realisiert werden. Werden hohe Sendefrequenzen verwendet, sind die notwendigen Abstände zwischen den Elementen kleiner und das ganze System kann von einem Flugzeug in geeigneter Weise geschleppt werden. Bei Verwendung eines separaten Beleuchtungssytems bliebe das Flugzeug passiv und könnte nicht so leicht geortet werden. Ein Krisengebiet könnte so quasi ununterbrochen aus relativ großer Höhe mit großer Auflösung beobachtet werden.

## Patentansprüche

1. Hochauflösendes Synthetik-Apertur-Radarsystem mit einer Anzahl von n SAR-Systemen auf satelliten- oder flugkörpergestützten Träger-Plattformen, die sich in einer vorgesehenen Formation bewegen, in vorgesehenem Abstand voneinander angeordnet sind und deren Antennenblickrichtungen auf den gleichen, mittels Mikrowellenimpulsen beleuchteten Bereich auf dem Boden ausgerichtet sind, wobei die gewonnenen mehrfachen SAR-Datensätze in einem Signalprozessor phasenrichtig zu einem SAR-Bild mit erhöhter geometrischer Auflösung zusammengesetzt werden, **dadurch gekennzeichnet, daß** die Abstände unter den Träger-Plattformen in Flugrichtung und die Blickwinkel der Antennen so ausgerichtet sind, daß unterschiedliche räumliche Spektralbereiche des vom Boden rückgestreuten Signals mit einer gewissen Überlappung der Azimut-bzw Doppler-Spektren aufgenommen werden.

2. Radarsystem nach Anspruch 1, **dadurch gekennzeichnet, daß** die Beleuchtung des Bodens mit kohärenten Strahlungsimpulsen, wie Hochfrequenz- bzw. Mikrowellenstrahlungsimpulsen durch einen in der Formation vorgesehenen Sender oder durch eine als kohärenter Sender arbeitende SAR-Plattform erfolgt.

3. Radarsystem nach Anspruch 1, **dadurch gekennzeichnet, daß** die Beleuchtung des Bodens mit kohärenten Strahlungsimpulsen, wie Hochfrequenz- bzw. Mikrowellenstrahlungsimpulsen durch eine Vielzahl von kohärenten Sendern erfolgt, die gleichzeitig den gleichen Bereich am Boden beleuchten und deren Signale von allen SAR-Plattformen der Formation empfangen werden.

4. Radarsystem nach Anspruch 1, **dadurch gekennzeichnet, daß** die Beleuchtung des Bodens mit kohärenten Strahlungsimpulsen, wie Hochfrequenz- bzw. Mikrowellenstrahlungsimpulsen durch einen oder mehrere Sender, die sich auf einer anderen Flugbahn als die Empfänger befinden, nämlich einem anderen Erdorbit bei satellitengetragenen Systemen oder auf einem geostationären Orbit.

5. Radarsystem nach einem der vorhergehenden Ansprüche, **dadurch gekennzeichnet, daß** bei gleichzeitigem Verwenden einer Anzahl von Sendern, die in unterschiedlichen Spektralbereichen arbeiten oder mit unterschiedlichen Signalformen, wie "up oder down Chirps", oder M-Sequenzen codiert sind, und bei gleichzeitigem Empfang verschiedener Sender mittels eines SAR-Empfängers eine unterschiedliche Charakterisierung der Sendesignale zum Trennen der verschiedenen Signale im Empfänger bzw. in dessen Signalprozessor eingesetzt werden.

6. Radarsystem nach einem der vorhergehenden Ansprüche, **dadurch gekennzeichnet, daß** zur Gewährleistung von Kohärenz aus Abstandsmessungen zwischen den Einheiten abgeleitete Korrektursignale die Phase von Oszillatoren nachgeregelt wird.

7. Radarsystem nach einem der Ansprüche 1 bis 5, **dadurch gekennzeichnet, daß** zur Gewährleistung von Kohärenz zwischen der Anzahl Sender und Empfänger ein Sender aus der Formation eine Referenz-Trägerschwingung an die anderen Trägereinheiten überträgt, die darauf aufsynchronisieren.

8. Radarsystem nach Anspruch 7, **dadurch gekennzeichnet, daß** bei Benutzen einer Mikrowellenverbindung aus einer gemessenen Phasenverschiebung die Abstandsdrift unter den Satelliten abgeleitet und die Lage entsprechend gegengeregelt wird.

9. Radarsystem nach einem der vorhergehenden Ansprüche, **dadurch gekennzeichnet, daß** in einem Signalprozessor die Signale der verschiedenen Empfänger phasenrichtig aneinandergefügt werden, um ein verbreitertes Dopplerspektrum mit erhöhter inhärenter Auflösung zu erhalten, indem aus den spektralen Überlappungsbereichen ein Interferogramm gebildet wird, aus dem eine Korrekturphase abgeleitet wird.

10. Radarsystem nach Anspruch 5, **dadurch gekennzeichnet, daß** bei Verwenden mehrerer Sender zunächst die empfangenen Datensätze durch spektrale Filterung oder Korrelation mit dem gesendeten Code so aufbereitet werden, daß die verschiedenen Senderanteile voneinander getrennt und sie dann phasenrichtig zu einem höher auflösenden Range/Dopplerspektrum zusammenzusetzen werden, welches als Ganzes einer Azimutkompression unterzogen wird, oder in Teilen komprimiert wird und dann die komplexen Teilbilder phasenrichtig zu einem hochaufgelösten Bild kombiniert werden.

11. Radarsystem nach einem der vorhergehenden Ansprüche, **dadurch gekennzeichnet, daß** für "Across-Track"-Interferometrie mit erhöhter geometrischer Auflösung zwei parallele Anordnungen (C, D) von Plattformen (1 bis 5; 6 bis 10) konfiguriert werden.

12. Radarsystem nach einem der Ansprüche 1 bis 8, **dadurch gekennzeichnet, daß** für eine "Along-Track"-Interferometrie die in einer Reihe angeordnete Plattformen (1 bis n) in zwei Gruppen (A, B) zusammengefaßt werden.

13. Radarsystem nach einem der Ansprüche 1 bis 8, **dadurch gekennzeichnet, daß** für eine Bewegtziel-Detektion eine Matrix von Plattformen konfiguriert ist.

14. Radarsystem nach einem der Ansprüche 1 bis 5, **dadurch gekennzeichnet, daß** zum Erreichen einer maximalen radiometrischen Auflösung die aus den einzelnen Kanälen gewonnenen SAR-Bilder überlagert und inkohärent aufaddiert werden, um das Speckle Noise zu reduzieren.

15. Radarsystem nach einem der Ansprüche 1 bis 5, **dadurch gekennzeichnet, daß** die Antennenausrichtung in Elevation so eingestellt ist, daß jeder Empfänger einen anderen Teilbereich aus dem beleuchteten Geländestreifen aufnimmt, die im Signalprozessor zu einem sehr breiten Streifen zusammengefügt werden.

## Claims

1. A high-resolution synthetic aperture radar (SAR) system comprising a plurality of n SAR systems on satellite or aircraft supported carrier platforms moving in a defined formation, arranged spaced away from each other defined and whose antennas are aimed at a common ground area illuminated by means of microwave pulses, whereby the obtained multiple SAR data sets are synthesized in a signal processor in phase into a SAR image of enhanced geometrical resolution, **characterized in that** the spacings between the carrier platforms in the direction of flight and the squint of the antennas are oriented so that differing spatial spectral ranges of the signal backscattered by the ground are mapped with a certain overlap of the azimuth or Doppler spectra.

2. The radar system as set forth in claim 1, **characterized in that** illuminating the ground with coherent radiation pulses such as high frequency or microwave radiation pulses is performed by a transmitter provided in the formation or by a SAR platform working as a coherent transmitter.

3. The radar system as set forth in claim 1, **characterized in that** illuminating the ground with coherent radiation pulses such as high frequency pulse response microwave radiation pulses is performed by a plurality of coherent transmitters simultaneously illuminating the same ground area and whose signals are received by all SAR platforms of the formation.

4. The radar system as set forth in claim 1, **characterized in that** illuminating the ground with coherent radiation pulses such as high frequency or microwave radiation pulses is performed by one or more transmitters located on a flight path differing to that of the receivers, namely in another orbit for satellite-supported systems or on a geostationary orbit.

5. The radar system as set forth in any of the preceding claims, **characterized in that** with simultaneous use of a plurality of transmitters working in differing spectral ranges or with differing signal shapes such as up or down chirps, or coded with M sequences and with simultaneous reception of various transmitters by means of a SAR receiver the transmitter signals are **characterized** differingly to separate the various signals in the receiver or in its signal processor.

6. The radar system as set forth in any of the preceding claims, **characterized in that** to ensure coherency, the phase of the oscillators is corrected by signals derived from spacing measurements between the units.

7. The radar system as set forth in any of the claims 1 to 5, **characterized in that** to ensure coherency, between the number of transmitters and receivers a transmitter of the formation communicates a reference carrier oscillation to the other carrier units to which they synchronize.

8. The radar system as set forth in claim 7, **characterized in that** when using a microwave link the drift in the spacing of the satellites is derived from a measured shift in phase and the situation correspondingly counteracted controlled.

9. The radar system as set forth in any of the preceding claims, **characterized in that** in a signal processor the signals of the various receivers are located in-line in phase to obtain a widened Doppler spectrum with enhanced inherent resolution, by forming an interferogram from the spectral overlapping ranges from which a correction phase is derived.

10. The radar system as set forth in claim 5, **characterized in that** when using several transmitters first the received data sets are conditioned by spectral filtering or correlated with the transmitted code so that the various transmitter components are separated from each other and are then synthesized in phase into a range/Doppler spectrum of higher resolution which is subjected as a whole to azimuth compression or compressed in parts and then the complex subimages combined in phase into a high-resolution image.

11. The radar system as set forth in any of the preceding claims, **characterized in that** for across-track interferometry with enhanced geometric resolution two parallel arrays (C, D) of platforms (1 to 5; 6 to 10) are configured.

12. The radar system as set forth in any of the claims 1 to 8, **characterized in that** for along-track interferometry the platforms (1 to n) arranged in-line are combined in two groups (A, B).

13. The radar system as set forth in any of the claims 1 to 8, **characterized in that** for moving target detection a matrix of platforms is configured.

14. The radar system as set forth in any of the claims 1 to 5, **characterized in that** to achieve maximum radiometric resolution the SAR images obtained from the individual channels are registered and added incoherently to reduce the speckle noise.

15. The radar system as set forth in any of the claims 1 to 5, **characterized in that** the elevation of the antenna is set so that each receiver maps a differing subpatch of the illuminated swath which are synthesized in the signal processor into a very wide swath.

## Revendications

1. Système de radar à ouverture synthétique à haute résolution comportant un nombre de n systèmes SAR installés sur des plates-formes de support portées par des satellites ou des aéronefs et qui sont disposés dans une formation prévue et sont disposés à un distance prévue les uns des autres et dont les directions d'observation des antennes sont dirigées sur la même zone du sol, éclairée par des impulsions à micro-ondes, les multiples ensembles obtenus de données SAR étant réunis en phase dans un processeur de signaux, pour former une image SAR présentant une résolution géométrique élevée, **caractérisé en ce que** les distances au-dessous des plates-formes de support dans la direction de vol et les angles d'observation des antennes sont orientés de telle sorte que des plages spectrales spatiales du signal rétrodiffusé par le sol sont enregistrés avec un certain chevauchement des spectres en azimut ou des spectres Doppler.

2. Système de radar selon la revendication 1, **caractérisé en ce que** l'éclairement du sol avec des impulsions de rayonnement cohérentes, comme par exemple des impulsions de rayonnement à haute fréquence ou des impulsions de rayonnement à micro-ondes, s'effectue au moyen d'un émetteur prévu dans la formation ou au moyen d'une plate-forme SAR qui travaille en tant qu'émetteur cohérent.

3. Système de radar selon la revendication 1, **caractérisé en ce que** l'éclairement du sol avec les impulsions de rayonnement cohérentes, telles que des impulsions de rayonnement à haute fréquence ou à micro-ondes, s'effectue au moyen d'une multiplicité d'émetteurs cohérents, qui éclairent simultanément la même zone au sol ou dont les signaux sont reçus par toutes les plates-formes SAR de la formation.

4. Système de radar selon la revendication 1, **caractérisé en ce que** l'éclairement du sol avec des impulsions de rayonnement cohérente comme par exemple des impulsions de rayonnement à haute fréquence ou à micro-ondes est réalisé au moyen d'un ou de plusieurs émetteurs, qui sont situés sur une autre trajectoire de vol que les récepteurs, à savoir sur une autre orbite terrestre dans le cas de systèmes portés par des satellites ou sur une orbite géostationnaire.

5. Système de radar selon l'une quelconque des revendications précédentes, **caractérisé en ce que** dans le cas de l'utilisation simultanée d'un certain nombre d'émetteurs, qui travaillent dans des plages spectrales différentes ou avec des formes de signaux différentes ou sont codés avec différentes formes de signaux, tels que des "up ou down Chirps" ou par des séquences M, lors de la réception simultanée de différents émetteurs à l'aide d'un récepteur SAR, une caractérisation différente des signaux d'émission est exécutée pour séparer les différents signaux dans le récepteur ou dans le processeur de signaux.

6. Système de radar selon l'une quelconque des revendications précédentes, **caractérisé en ce que** pour garantir la cohérence de signaux de correction dérivés de mesures de distance entre des unités, la phase d'oscillateurs est réglée par asservissement.

7. Système de radar selon l'une quelconque des revendications 1 à 5, **caractérisé en ce que** pour garantir la cohérence entre le nombre d'émetteurs et de récepteurs, un émetteur faisant partie de la formation transmet une oscillation de porteuse de référence aux autres unités de support, qui se synchronisent sur cet oscillateur.

8. Système de radar selon la revendication 7, **caractérisé en ce que** dans le cas de l'utilisation d'une liaison à micro-ondes, la dérive de distance entre les satellites est tirée d'un déphasage mesuré et la position est réglée de façon correspondante par asservissement dans le sens opposé.

9. Système de radar selon l'une quelconque des revendications précédentes, **caractérisé en ce que** dans un processeur de signaux, les signaux des différents récepteurs sont juxtaposés d'une manière correcte en phase pour l'obtention d'un spectre Doppler élargi avec une résolution propre accrue, et par le fait qu'à partir des zones spectrales de superposition est formé un interférogramme, à partir duquel une correction de phase est dérivée.

10. Système de radar selon la revendication 5, **caractérisé en ce que** dans le cas de l'utilisation de plusieurs émetteurs, tout d'abord les ensembles de données reçus sont traités au moyen d'un filtrage spectral ou d'une corrélation avec le code émis de telle sorte que les différentes composantes produites par les émetteurs sont séparées les unes des autres et sont ensuite rassemblées d'une manière correcte en phase pour former un spectre de portée/spectre Doppler à résolution plus élevée, qui est soumis globalement à une compression en azimut, ou bien est comprimé par des parties et ensuite les images partielles complexes sont combinées d'une manière correcte du point de vue de la phase pour former une image à haute résolution.

11. Système de radar selon l'une quelconque des revendications précédentes, **caractérisé en ce que** deux ensembles parallèles (C, D) de plates-formes (1 à 5 ; 6 à 10) sont configurés pour l'interférométrie "Across-Track" avec une résolution géométrique accrue.

12. Système de radar selon l'une quelconque des revendications 1 à 8, **caractérisé en ce que** les plates-formes (1 à n), qui sont disposées en série, sont rassemblées en deux groupes (A, B) pour une interférométrie "Along-Track".

13. Système de radar selon l'une quelconque des revendications 1 à 8, **caractérisé en ce qu'**une matrice de plates-formes est configurée pour une détection de cibles mobiles.

14. Système de radar selon l'une quelconque des revendications 1 à 5, **caractérisé en ce que** pour obtenir une résolution radiométrique maximale, les images SAR obtenues à partir des différents canaux sont superposées et sont additionnées d'une manière incohérente, de manière à réduire le bruit specksenoise.

15. Système de radar selon l'une quelconque des revendications 1 à 5, **caractérisé en ce que** l'orientation de l'antenne est réglée en élévation de telle sorte que chaque récepteur reçoit une autre zone partielle tirée de la bande de terrain éclairée, et que les bandes sont rassemblées dans le processeur de signaux pour former une très large bande.
